# FASCICULE DE BREVET EUROPEEN

(11) **EP 2 864 138 B1**
(45) Date de publication et mention de la délivrance du brevet: **17.08.2016**
(21) Numéro de dépôt: 12740624.7
(22) Date de dépôt: 22.06.2012
(51) Int. Cl.: B60C 23/04, G06K 19/00

(54) **PROCEDE DE GESTION DES IDENTIFIANTS DE PNEUMATIQUE**
VERFAHREN ZUR ERKENNUNG VON REIFENKENNZEICHNUNGEN
METHOD FOR RECOGNISING OF TIRE IDENTIFIERS

(43) Date de publication de la demande: 29.04.2015
(73) Titulaire: LDL Technology, 31520 Ramonville Saint Agne (FR)
(72) Inventeur: BRACQ, Manuel, F-06600 Antibes (FR); LEFAURE, Philippe, F-31450 Montbrun Lauragais (FR)
(74) Mandataire: Richebourg, Michel François
(86) Numéro de dépôt international: PCT/FR2012/051442
(87) Numéro de publication internationale: WO 2013/190189

(56) Documents cités:
- FR-A1- 2 912 235

## Description

### DOMAINE D'APPLICATION DE L'INVENTION

La présente invention a trait au domaine de la gestion des données associées aux roues des véhicules et notamment aux adaptations permettant de communiquer les informations liées au pneumatique de la roue dans les meilleures conditions.

### DESCRIPTION DE L'ART ANTÉRIEUR

Les pneumatiques sont classiquement associés à un identifiant.. Cet identifiant peut par exemple prendre la forme d'un code inscrit sur le pneumatique.

L'avantage notamment pour le manufacturier, l'équipementier, l'utilisateur est de pouvoir tracer précisément la vie d'un pneumatique, identifier ses rechapages, connaître les dates auxquelles ont été faits les entretiens, etc... Une telle traçabilité permet également d'envisager la surveillance de la mise en service de pneumatiques de contrefaçon.

Un des problèmes techniques lié à la mise en oeuvre d'une telle traçabilité réside dans le suivi et la localisation des pneumatiques qui peuvent êtres déplacés d'une jante à l'autre au cours d'une opération de maintenance, mais aussi dans la localisation de la roue équipée sur l'engin motorisé. En effet, les usures des pneumatiques ne sont pas toutes semblables et peuvent varier selon la position affectée au pneumatique en particulier sur un camion de type poids lourd

Pour optimiser la fonction d'identifiant, il est aujourd'hui connu d'intégrer dans la gomme du pneumatique des radio-étiquettes contenant une puce, une antenne et une mémoire unique capable d'être lue par un équipement. Ces radio-étiquettes connues sous la dénomination de Tag ou marqueur RFID (pour Radio Frequency IDentification) sont capables de stocker des données mais aussi de les restituer lorsqu'elles sont interrogées. Un tel dispositif similaire est divulgé dans le document FR, 2912 235 en accord avec le préambule de la revendication 1.

Afin de mettre en oeuvre le dialogue avec ces radio-étiquettes, il existe des systèmes proposant des antennes bobiniées (exploitant une technologie basse fréquence autour de 125 KHz) figées au châssis du véhicule au voisinage des passages de roue. Ces antennes sont reliées à une électronique de bord capable de les piloter. Ces antennes interrogent la radio étiquette intégrée au pneumatique, qui répond en transmettant les données relatives au pneumatique en question. Le pneumatique est alors identifié et localisé dans cet exemple.

La mise en oeuvre d'une telle technologie impose la présence à bord d'un système électronique coûteux et lourd à installer sur le véhicule, avec des antennes particulièrement exposées dans les passages de roues.

En outre, cette technologie s'appuyant sur l'utilisation d'une radio étiquette de type marqueur RFID dit passive (non alimentée en énergie), nécessite l'utilisation d'une antenne adaptée afin notamment de couvrir les 360 degrés d'angle et rester ainsi toujours accessibles à la communication avec les antennes fixées au châssis du véhicule.

Une solution consiste en une antenne faisant le tour du pneumatiques. Le problème d'une telle solution réside dans son coût qui nécessite une antenne par roue et un calculateur rembarqué dédiés à cette application mais également dans sa complexité, et dans la fragilité des parties embarquées au niveau des antennes.

Une autre solution consiste à utiliser un autre système de gestion de données lié aux roues et susceptible d'équiper le véhicule. Ainsi, par exemple, il existe dans l'art antérieur des systèmes de surveillance de la pression des pneumatiques (dits TPMS pour Tyre Pressure Monitoring System) qui associent à chaque roue des modules de prise de mesure fixés à chaque roue. Ces modules de mesure sont équipés chacun d'une antenne qui permet pour chaque roue et grâce à un réseau de radiofréquence de communiquer avec des antennes d'unités de réception associées au châssis, des informations liées à des paramètres mesurés dans le pneumatique.

Si la communication entre les radio-étiquettes et les antennes du système de surveillance des pneumatiques semble inenvisageable, l'art antérieur tel celui décrit dans le document FR 2912235, divulgue un système où la radio étiquette communique avec le module de prise de mesure fixé à la roue, module intégrant alors dans les informatisons qu'il transmet les informations liées au pneumatique lui-même.

Bien que susceptible d'apporter une solution à la nécessaire prôximité entre la radio étiquette et. le moyen technique permettant son activation, cette dernière solution implique également que chaque module de chaque roue soit équipé non seulement pour stocker et transmettre les nouvelles informations mais également pour activer, interroger et lire lesdites radio étiquettes, ce qui constitue un surcoût.

De plus, le positionnement sur la roue du module de prise de mesure et celui de la radio étiquettes requiert une attention particulière en ce que la distance entre l'antenne du module de prise de mesure et la radio étiquette doit être la plus courte possible alors que classiquement la disposition angulaire du pneumatique sur la jante importe peu.

### RESCRIPTION DE L'INVENTION

Partant de cet état de fait, la demanderesse a mené des recherches visant à solutionner les inconvénients de l'art antérieur liés à l'exploitation d'un réseau de communication existant entre les roues et le châssis à des fins de traçabilité des pneumatiques. Ces recherches ont abouti non seulement à un procédé permettant d'optimiser la gestion des données d'identification des pneumatiques mais également d'obvier aux inconvénients liés à l'utilisation des radio-étiquettes associées à chaque pneumatique.

Le procédé de l'invention assume la gestion de données relatives à un ensemble formant une roue d'un véhicule, ladite roue comprenant un pneumatique monté sur une jante, ladite roue portant un module de prise de mesure, ledit pneumatique portant un identifiant constitué par une radio étiquette de type marqueur RFID, ladite roue pouvant présenter différents états :
- monté où ledit pneumatique est monté sur la jante;
- démonté où lendit pneumatique n'est pas monté sur la jante,
où le module de prise de mesure détecte la variation de pression dans le pneumatique, et
où la mémoire de stockage dudit module de prise de mesure est réinscriptible. Ce procédé est remarquable en ce qu'il consiste lors d'une variation de pression, à remplacer les données stockées dans le module de prise de mesure par de nouvelles données issues d'un autre pneumatique.

Ainsi, lorsque le pneumatique subit une variation de pression déterminait la nécessité d'une maintenance, le nouveau pneumatique nécessaire va servir de source à de nouvelles données notamment les données d'identification venant remplacer et donc effacer les anciennes données d'identification stockées dans la mémoire du module de prise de mesure. Cette caractéristique exploitant une des fonctionnalités des modules de prise de mesure assure la flexibilité du système et tient compte du fait que les changements ou les opérations de maintenance lié au pneumatique auront pour conséquence une variation de pression.
La demanderesse a sélectionné plusieurs possibilités de prise en compte de l'événement déclencheur du remplacement.

Selon une autre caractéristique particulièrement avantageuse de l'invention, le procédé consiste à définir un seuil bas de pression dont le franchissement détecté par le module de prise de mesure, déclenche l'effacement par remplacement du contenu de la mémoire du module de prise de mesure contenant les données associées à l'identifiant. C'est alors une chute de pression qui déclenche le remplacement.

Selon une autre caractéristique particulièrement avantageuse de l'invention, le procédé consiste à définir un seuil haut de pression dont le franchissement détecté par le module de prise de mesure après franchissement du seuil bas donc à la remontée en pression, déclenche le remplacement et donc l'effacement du contenu de la mémoire du module de prise de mesure contenant les données, associées à l'identifiant. Selon cette caractéristique, c'est donc une fois que la pression revient dans le pneumatique que l'effacement et le remplacement sont réalisés, c'est à dire lorsqu'un nouveau pneumatique avec un nouveau identifiant est installé.

La communication entre le module de roue et la radio-étiquette RFID a fait l'objet d'une étude par la demanderesse.
Selon une caractéristique particulièrement avantageuse, le procédé est remarquable en ce que les données associées à l'identifiant sont transmises au module de prise de mesure au moyen d'une unité intermédiaire séparée de l'ensemble et du véhicule, comprenant des moyens de transmission de données.

Cette caractéristiques est particulièrement avantageuse en ce qu'elle permet de mettre en oeuvre la traçabillté en temps réel des pneumatiques sans système de transmission supplémentaire en exploitant le réseau de communication déjà existant exploite à des fins de surveillance des pneumatiques. Ce procédé implique ainsi qu'en addition des données classiquement transmises par ce type d'équipement, les différents messages envoyés par le module de prise de mesure comprennent alors les données liées aux pneumatiques eux-mêmes telles celles décrites plus haut. Ces données peuvent être récupérées par le même réseau de communication que celui transmettant les données de surveillance des roues.

Concrètement, l'unité intermédiaire comprend un moyen de saisie de l'identifiant ou de lecture de ce dernier pour ensuite le transmettre audit module. Un effet technique issu de l'appairage entre l'identifiant du pneumatique et celui du module de mesure de la pression, réside dans le fait qu'une seule interrogation permet de disposer des deux informations sans nécessiter de presser plusieurs boutons sur ledit trigger.

Ainsi ces données associées à l'identifiant et/ou l'identifiant lui-même sont selon une caractéristique particulièrement avantageuse transmise vers le module de prise de mesure qui les stocke afin qu'elles soient présentes dans les communications réalisées par ledit module dans son propre réseau. En effet, selon une autre caractéristique de l'invention, où le module de prise de mesure communique avec une unité de réception intégrée au chassis du véhicule, le procédé consiste à intégrer à la trame de communication dudit module avec l'unité de réception, tout ou partie des données issues de la lecture de l'identifiant et stockées dans la mémoire dudit module. Le procédé de l'invention permet un contrôle en temps réel des paramètres liés aux pneumatiques d'un véhicule ou d'une flotte de véhicules par appairage avec un réseau de communication et/ou le système de géolocalisation susceptible d'équiper le véhicule ou la flotte de véhicules.

Selon une autre caractéristique particulièrement avantageuse, ladite unité intermédiaire communique avec ladite radio étiquette et ledit module de prise de mesure de façon à appairer les données d'identification du pneumatique à celles du module de prise de mesure et envoie ledit appairage à l'unité de réception associée au châssis. Cet appairage et cet envoi réalisés une seule fois permettent de créer une table d'appairage au niveau du système de gestion recevant l'ensemble des données, table d'appairage qui évite que l'identifiant du module de prise de mesure et/ou celui de la ratio étiquette soient systématiquement présents associés dans la trame, permettant ainsi de réduire la durée d'émission ainsi que la consommation des batteries associées aux différents moyens d'émission (celui du module de prise de mesure mais également celui de l'unité de réception, etc...).

Le dit identifiant étant constitué par une radio étiquette de type marqueur RAID, le procédé de l'invention consiste à lire ladite radio étiquette au moyen de l'unité intermédiaire et à transmettre les données lues audit module de prise de mesure. Cette caractéristique évite les inconvénients de l'art antérieur relatifs à la gestion desdits radio étiquettes en exploitant astucieusement le réseau de surveillance des pneumatiques sans avoir à équiper chaque module de prise de mesure d'un moyen de lecture compatible avec la technologie RFID. Ainsi, pour mettre en oeuvre le procédé, seule l'unité intermédiaire est équipée dudit moyen de lecture compatible avec la technologie RFID. Selon une caractéristique particulièrement avantageuse, l'unité intermédiaire lit et écrit dans la radio étiquette de type marqueur RFID. Cette caractéristique permet par exemple d'inscrire dans ledit marqueur les informations de maintenance effectives opérées sur le pneumatique et donc de compléter l'historique dudit pneumatique.

Selon une autre caractéristique liée à une configuration de roues jumelées chacune équipée d'un module de prise de mesure et d'une radio étiquette, le procédé est remarquable en ce que lendit trigger est conçu pour rechercher, une fois positionné devant l'essieu jumelé, deux radio étiquettes différentes jusqu'à les trouver en éliminant le premier signal reçu pour mieux se concentrer sur la réception du second.

La demanderesse a également imaginé une alternative de solution de communication pour le procédé de l'invention qui selon cette alternative est remarquable en ce que le module de prise de mesure active et/ou communique avec la radio étiquette au moyen d'une émission d'ondes au-delà de 100Mhz venant se réfléchir sur la structure, métallique du pneumatique.
Selon un mode de réalisation préféré, le module de prise de mesure émet ces ondes qui, se réfléchissant sur la structure métallique du pneumatique, vont activer la radio-étiquette qui elle n'est pas alimentée de manière autonome.
Cette caractéristique instaure un dialogue direct entre le module de prise de mesure et la radio étiquette et le rend possible en temps réel et en mouvement, sans intervention extérieure et donc sans passer par l'intermédiaire du trigger en exploitant une gamme de fréquences se réfléchissant dans le volume du pneumatique et permettant ainsi le dialogue quels que soient la position et l'éloignement entre la radio étiquette et le module de prise de mesure.

Afin de mettre en oeuvre une telle communication, le module de prise de mesure équipant la roue est équipée d'une antenne isotrope garantissant une émission et une réception multidirectionnelle dans le pneumatique.

Ledit dialogue peut également être réalisé entre la radio-étiquette et l'unité de réception associée au châssis véhicule, le module de prise de mesure se contentant alors d'activer la radio-étiquette et de dialoguer avec ladite unité de réception. Ladite radio-étiquette transmet alors les données qu'elle contient, à l'unité de réception et non au module de prise de mesure.

Afin que l'effacement proposé par la caractéristique principale ne soit pas causé accidentellement, le procédé est remarquable en ce que, selon une autre caractéristique particulièrement avantageuse, la variation de pression soit mesurée sur une durée donnée avant de réaliser le remplacement de l'identifiant associé à la radio étiquette dans le module électronique. Par exemple, la chute de pression doit pouvoir avoir été détectée plusieurs fois sur une durée relativement longue avant de déclencher ledit remplacement.

Selon une autre caractéristique, le procédé consiste dans la mémoire du module de prise de mesure, à associer aux données issues du marqueur RFID stockées dans la mémoire, une information liée à la chute de pression mesurée. Dans un tel mode de fonctionnement, le module de prise de mesure stocke une pression inférieure à un seuil bas de pression, seuil franchis pendant un certain temps. Ainsi, lorsque le module de prise de mesure est interrogé par l'unité intermédiaire ou trigger, il remonte vers ladite unité cette avarie sous la forme d'une maintenance potentielle. Cette information de maintenance potentielle est transmise et écrite dans: le marqueur RFID du pneumatique de façon cachée à l'opérateur, opérateur qui lui devrait notifier audit marqueur l'opération affective de maintenance de ce pneumatique via l'unité intermédiaire lors du service sur le pneumatiques. Si le pneumatique est changé de jante durant cette opération de maintenance sans que le module de prise de mesure n'ait été notifié par l'opérateur, ledit module aura déjà informé l'unité de réception et donc au réseau de communication gérant la flotte. De plus, avant de réintégrer un identifiant du pneumatique dans la mémoire du module de prise de mesure, cette informations peut être notifiée à l'unité intermédiaire comme une alerte avant admission d'un nouveau code RFID du nouveau pneumatique.

Selon une autre caractéristique, les données, de la radio étiquette sont transmises audit module de prise de mesure lorsque la roue est en cours de montage c'est-à-dire lorsque l'ensemble roue est dans un état où le pneumatique n'est pas encore fixé à la jante.

Les différentes possibilités de caractéristiques de procédés de travail sont nombreuses par exemple :
- les données sont transmises audit module de prise de mesure lorsqu'il n'y a pas de données relatives au pneumatique inscrites dans la mémoire dudit module.
- les données issues du pneumatique sont transmises audit module avec des données supplémentaire comme par exemple, des données relatives à une opération de maintenance.

L'invention concerne également le dispositif formant une unité intermédiaire pour la transmission de données conformément à tout ou partie des caractéristiques de procédé ci-dessus décrites.

Selon une caractéristique, ce dispositif est portable et se présente sous la forme d'un Trigger regroupant les fonctionnalités permettant de saisir ou de lire l'identifiant porté par le pneumatique et de le transmettre audit module de prise de mesure. La portabilité dudit dispositif assure de la bonne distance entre ce dernier et la radio-étiquette pour son activation et sa lecture.

Selon une autre caractéristique ladite unité est intégrée à un dispositif de montage et de démontage de pneumatique.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé et de dispositifs conformes à l'invention.

### BRÈVE DESCRIPTION DES DESSINS

La figure 1 est un dessin schématique d'un camion équipé d'un dispositif de surveillance de la pression de pneumatique et de pneumatiques équipés de marqueur RFID,
La figure la illustre' les communications possibles entre les différents sous ensembles d'émission et de réception du véhicule de la figure 1,
La figure 2 est un dessin schématique d'un dispositif portable de transmission et d'une roue,
la figure 3 est un dessin schématique d'un dispositif de montage de pneumatiques intégrant mode de réalisation de dispositif de transmission de l'invention,

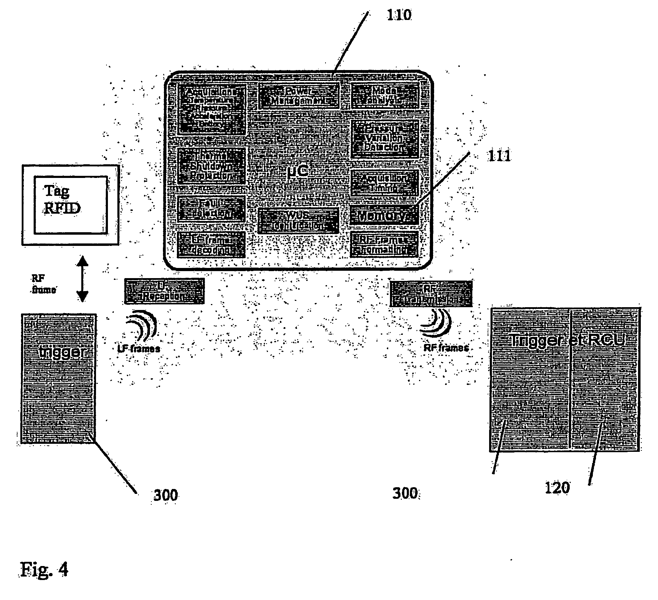

la figure 4 est un dessin synoptique d'un module de prise de mesure,
la figure 5 est un dessin schématique d'une trame de communication.

### DESCRIPTION DES MODES DE RÉALISATION PRÉFÉRÉS

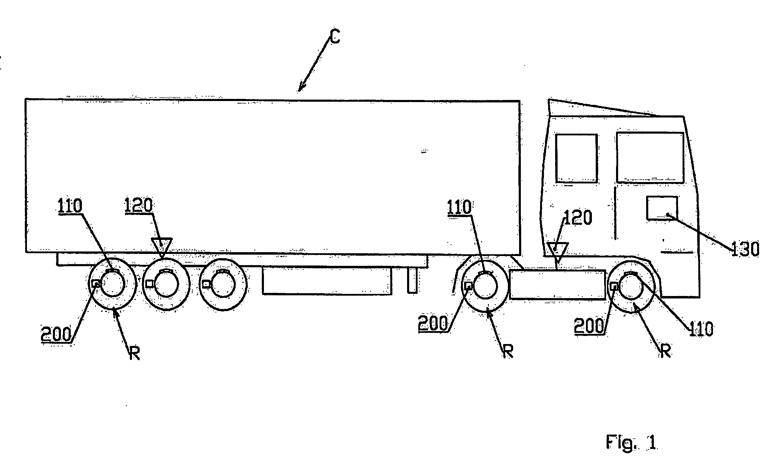

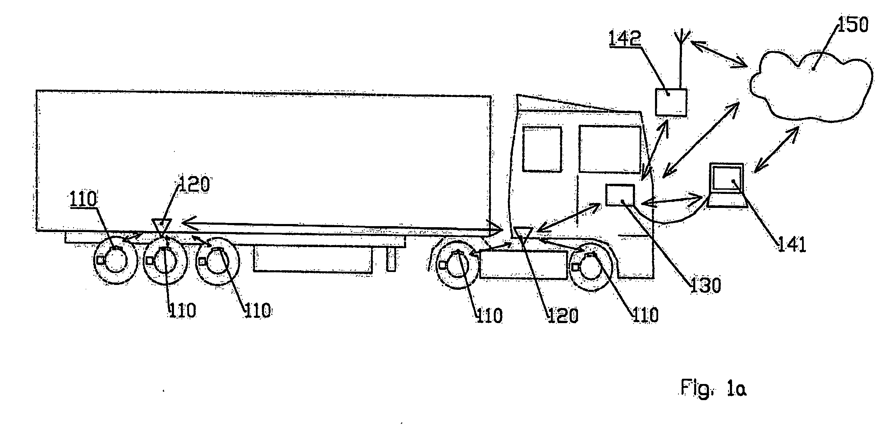

Tel qu'illustré sur les dessins des figures 1 et la, le véhicule C est équipé d'un dispositif de surveillance de la pression des pneumatiques constitué par des modules de prises de mesure 110 fixés à chaque roue R. et communiquant avec des unités dé réception 120 fixées au châssis du véhicule C lesquelles communiquent avec une unité centrale de réception 130. Cette unité centrale de réception 130 est elle susceptible de communiquer sans fil ou avec fil avec un ordinateur 141., une antenne relais 142, ou avec tout moyen de connexion à un réseau 150 de type GSM, GPS etc... Comme illustré, il n'y a pas de communication entre le module de prise de mesure 110 et la radio étiquette 200 associés à chaque roue ni entre la radio étiquette 200 et l'unité de réception 120.

Comme celle illustrée sur le dessin de la figure- 3, les roues R reçoivent des pneumatiques portant des identifiants de type marqueur RFID 200. Selon un mode de réalisation préféré mais non limitatif, les modules de prise de mesure sont fixés à la jante et les marqueurs RFID sont noyés dans l'épaisseur de gomme constituant le flanc du pneumatique. La position du marqueur 200 par rapport au module de prise de mesure importe peu du fait du procédé de l'invention.

En effet, afin que les identifiants et/ou les données associées aux identifiants soient transmises dans la trame de communication des modules de prise de mesure 110, le procédé de l'invention propose que les données associées à l'identifiant sont transmises au module de prise de mesure à des fins de stockage, au moyen d'une unité intermédiaire séparée et indépendante de la roue R et du véhicule C, comprenant les moyens de transmission de données.

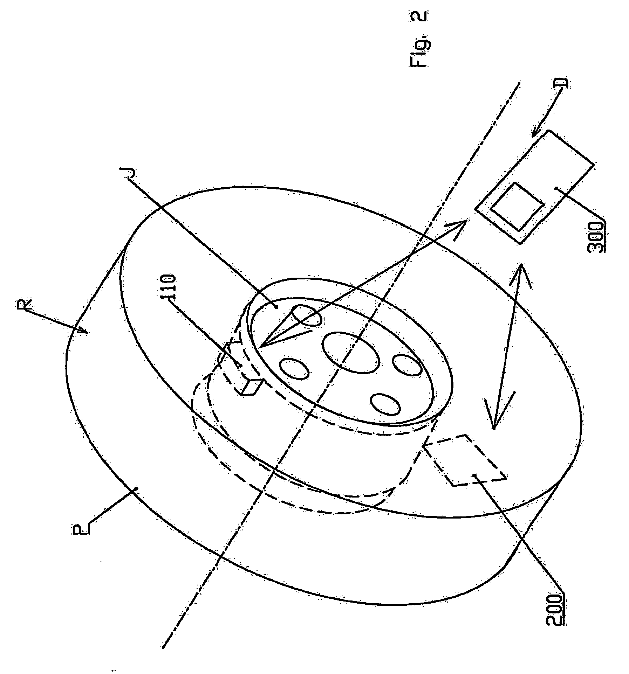

Pour ce faire selon une première solution de mise en oeuvre illustrée par le dessin de la figure 2, un dispositif portable D de type boîtier électronique de communication 300 dit « trigger » équipé de moyens de communication avec les marqueurs de type RFID 200 et de moyens de communication avec les modules de prise de mesure 110, assure la transmission de l'identifiant et/ou de données associées à l'identifiant, afin que ledit module de prise de mesure 110 en assure le stockage et la transmission dans son réseau de communication avec les unités de réception 120 portées par le véhicule ou dans tout dialogue avec un moyen d'interrogation adapté. Cette unité intermédiaire va également permettre d'inscrire des données dans lesdits marqueurs.

La portabilité du dispositif permet à son utilisateur de s'approcher au plus prés des sous-ensembles avec lesquels il doit communiquer et réaliser par exemple la transmission recherchée alors que les roues sont déjà montées sur le véhicule.

Bien entendu, l'identifiant ou les données stockées dans le marqueur peuvent être associés à d'autres données disponibles dans des bases de données indépendantes.

Ce dispositif portable D peut notamment réaliser la transmission, ou bien interroger lesdits modules de prise de mesure lorsque les pneumatiques sont déjà montés.

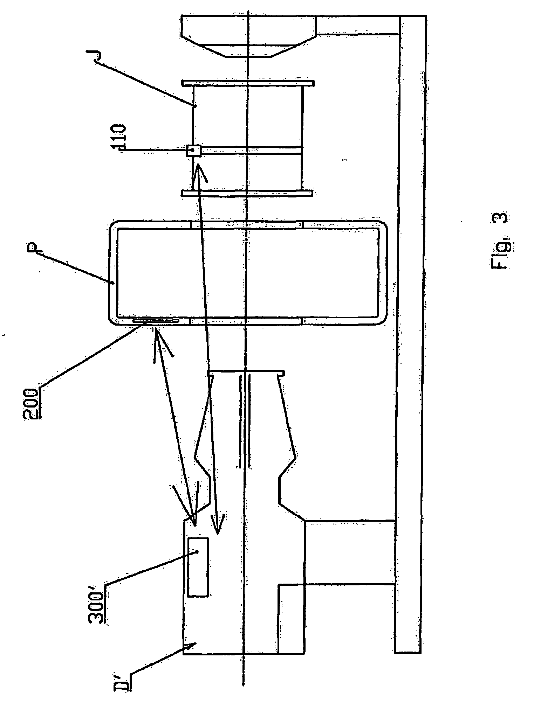

La demanderesse a néanmoins prévu une autre solution de transmission entrant en adéquation avec les opérations liées à l'installation du pneumatique lui-même. Ainsi, comme illustré sur le dessin de la figure 3, le dispositif de transmission 300' des données lues sur le marqueur RFID 200 du pneumatique P à monter dans la mémoire du module de prise de mesure monté ou à monter sur la jante J est intégré à un dispositif D' de montage et de démontage de pneumatique.

Comme illustré sur le schéma synoptique du module de prise de mesure 110, ce dernier garde ses éléments constitutifs participant à sa fonction de prise de mesure et de communication avec un réseau par radio fréquente. Conformément aux avantages du procédé de l'invention, il n'est pas modifié à des fins de communication avec un marqueur RFlD car c'est une unité intermédiaire indépendante de la roue ou du véhicule qui, équipée des moyens de communication adéquats communique avec le marqueur RFID et transmet les données lues audit module de prise de mesure et vice-versa. Pour intégrer ces nouvelles données, la capacité de la mémoire 111 peut néanmoins être augmentée.

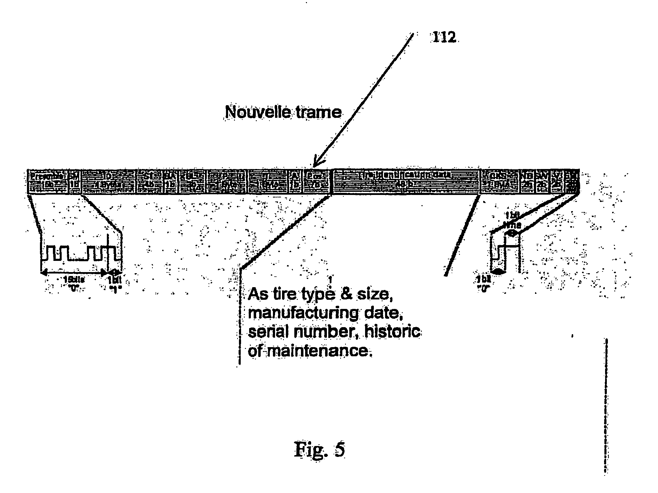

be plus, conformément au dessin de la figure 5, la trame 112 est allongée de 48 bits supplémentaires pour intégrer les paramètres du pneumatique.

Selon un mode de réalisation non illustré, ledit module électronique de prise de mesure 110 émet des ondes de fréquence allant au delà de 100Mhz afin de permettre leur réflexion par l'armature métallique du pneumatique afin d'activer la radio étiquette et/ou communiquer avec cette dernière.

On comprend que le procédé et les dispositifs, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de gestion de données relatives à un ensemble formant une roue (R) d'un véhicule (C), ladite roue (R) comprenant un pneumatique monté sur une jante, ladite roue portant un module de prise de mesure (110), ledit pneumatique portant un identifiant constitue par une radio étiquette (200) de type marqueur RFID, ladite roue pouvant présenter différents états :
- monté ou ledit pneumatique est monté sur la jante;
- démonté où ledit pneumatique n'est pas monté sur la jante, où le module de prise de mesure (110) détecte la variation de pression dans le pneumatique, et
où la mémoire de stockage dudit module de prise de mesure (110) est réinscriptible,
**CARACTERISE EN CE QU'**il consiste, lors d'une variation de pression, à remplacer les données stockées dans le module de prise de mesure (110) par de nouvelles données issues d'un autre pneumatique.

2. Procédé selon la revendication 1, **CARACTERISÉ EN CE QU'**il consiste à définir un seuil bas de pression dont le franchissement détecté par le module de prise de mesure (110), déclenche le remplacement et donc l'effacement du contenu de la mémoire du module de prise de mesure (110) contenant les données associées à l'identifiant (200).

3. Procédé selon la revendication 1, **CARACTÉRISÉ EN CE QU'**il consiste à définir un seuil haut de pression dont le franchissement détecté par le module de prise de mesure (110) après franchissement du seuil bas, déclenche le remplacement et donc l'effacement du contenu de la mémoire du module de prise de mesure (110) contenant les données associées à l'identifiant (200).

4. Procédé selon la revendication 1, **CARACTÉRISÉ EN CE QUE** le module de prise de mesure (110) active et/ou communique avec la radio étiquette (200) au moyen d'une émission d'ondes au-delà de 100Mhz venant se réfléchir sur la structure métallique du pneumatique.

5. Procédé selon la revendication 4 où le module de prise de mesure communique avec une unité de réception (120, 130) intégrée au châssis du véhicule (C), **CARACTÉRISÉ EN CE QUE** ladite radio-étiquette (200) transmet les données qu'elle contient à l'unité de réception (120, 130).

6. Procédé selon la revendication 4, **CARACTÉRISÉ EN CE QU'**il consiste à équiper le module de prise de mesure (110) par une antenne isotrope.

7. Procédé selon la revendication 1 où le module de prise de mesure (110) communique avec une unité de réception (120, 130) intégrée au châssis du véhicule (C), **CARACTERISE EN CE QU'**il consiste à intégrer à la trame de communication dudit module (110) tout ou partie des données issues de la lecture de l'identifiant (200) et stockées dans la mémoire.

8. Procédé selon la revendication 1, **CARACTERISE EN CE QU'**il consiste à mesurer la variation de pression sur une durée donnée avant de réaliser le remplacement de l'identifiant associé à la radio-étiquette (200) dans le module électronique.

9. Procédé selon la revendication 1, **CARACTERISE EN CE QUE** les données de la radio étiquette (200) sont transmises audit module de prise de mesure (110) lorsque la roue est en cours de montage c'est-à-dire lorsque l'ensemble roue est dans un état où le pneumatique n'est pas encore fixé à la jante.

10. Procédé selon la revendication 1, **CARACTERISE EN CE QUE** les données sont transmises audit module de prise de mesure (110) lorsqu'il n'y a pas de données relatives au pneumatique inscrites dans la mémoire dudit module (110).

11. Procédé selon la revendication 1, **CARACTERISE EN CE QUE** les données issues du pneumatique sont transmises audit module (110) avec des données supplémentaires comme par exemple des données relatives à une opération de maintenance.

12. Procédé selon la revendication 1, **CARACTERISE EN CE QU'**il consiste dans la mémoire du module de prise de mesure (110), à associer aux données issues du marqueur RFID (200) stockées dans la mémoire, une information liée à la chute de pression mesurée.

13. Procédé selon la revendication 1, **CARACTÉRISÉ PAR LE FAIT QUE** ladite unité intermédiaire communique avec ladite radio étiquette (200) et ledit module de prise de mesure (110) de façon à appairer les données d'identification du pneumatique à celles du module de prise de mesure (110) et envoie ledit appairage à l'unité de réception (120, 130) associée au châssis.

## Patentansprüche

1. Verfahren zum Verwalten von Daten in Bezug auf eine Einheit, die ein Rad (R) eines Fahrzeugs (C) bildet, wobei das besagte Rad (R) einen Reifen umfasst, der auf einer Felge montiert ist, wobei das besagte Rad ein Messmodul (110) trägt, wobei der besagte Reifen eine Kennung trägt, die durch ein Funketikett (200) in der Art eines RFID-Chips gebildet wird,
wobei das besagte Rad verschiedene Zustände aufweisen kann:
- montiert, bei dem der besagte Reifen auf der Felge montiert ist;
- demontiert, bei dem der besagte Reifen nicht auf der Felge montiert ist,
wobei das Messmodul (110) die Druckänderüng im Reifen erfasst, und
wobei der Speicher des besagten Messmoduls (110) wiederbeschreibbar ist,
**dadurch gekennzeichnet, dass** es darin besteht, bei einer Druckänderung die im Messmodul (110) gespeicherten Daten durch neue Daten zu ersetzen, die aus einem anderen Reifen stammen.

2. Verfahren nach Anspruch 1, **dadurch gekennzeichnet, dass** es darin besteht, einen unteren Druckgrenzwert zu definieren, dessen Überschreitung, de vom Messmodul (110) erfasst wird, den Tausch und somit die Löschung des Inhalts aus dem Speicher des Messmoduls (110) auslöst, der die Daten enthält, die der Kennung (200) zugeordnet sind.

3. Verfahren nach Anspruch 1, **dadurch gekennzeichnet, dass** es darin besteht, einen oberen Druckgrenzwert zu definieren, dessen Überschreitung, die vom Messmodul (110) nach dem Überschreiten des unteren Grenzwerts erfasst wird, den Tausch und somit die Löschung des Inhalts aus dem Speicher des Messmoduls (110) auslöst, der die Daten enthält, die der Kennung (200) zugeordnet sind.

4. Verfahren nach Anspruch 1, **dadurch gekennzeichnet, dass** das Messmodul (110) das Funketikett (200) durch eine Sendung von Wellen über 100 MHz, die von der Metallstruktur des Reifens reflektiert werden, aktiviert und/oder damit kommuniziert.

5. Verfahren nach Anspruch 4, wobei das Messmoul mit einer Empfangseinheit (120, 130) kommuniziert, die im Chassis des Fahrzeugs (C) integriert ist, **dadurch gekennzeichnet, dass** das besagte Funketikett (200) die Daten, die es enthält, an die Empfangseinheit (120, 130) überträgt.

6. Verfahren nach Anspruch 4, **dadurch gekennzeichnet, dass** es darin besteht, das Messmodul (110) mit einer isotropen Antenne zu bestücken.

7. Verfahren nach Anspruch 1, wobei das Messmodul (110) mit einer Empfangseinheit (120, 130) kommuniziert, die im Chassis des Fahrzeugs (C) integriert ist, **dadurch gekennzeichnet, dass** es darin besteht, in den Kommunikationsraster des besagten Moduls (110) alle oder einen Teil der Daten zu integrieren, die aus der Auslesung der Kennung (200) stammen und im Speicher abgelegt sind.

8. Verfahren nach Anspruch 1, **dadurch gekennzeichnet, dass** es darin besteht, die Druckänderung über eine gegebene Zeitdauer hinweg zu messen, bevor man den Tausch der Kennung vornimmt, die dem Funketikett (200) im Elektronikmodul zugeordnet ist.

9. Verfahren nach Anspruch 1, **dadurch gekennzeichnet, dass** die Daten des Funketiketts (200) zum besagten Messmodul (110) übertragen werden, wenn das Rad montiert wird, das heißt, wenn die Radeinheit in einem Zustand ist, in dem der Reifen noch nicht auf der Felge befestigt ist.

10. Verfahren nach Anspruch 1, **dadurch gekennzeichnet, dass** die Daten zum besagten Messmodul (110) übertragen werden, wenn es keine Daten im Verhältnis zum Reifen gibt, die im Speicher des besagten Moduls (110) eingetragen sind.

11. Verfahren nach Anspruch 1, **dadurch gekennzeichnet, dass** die Daten, die aus dem Reifen stammen, mit zusätzlichen Daten zum besagten Modul (110) übertragen werden, wie beispielsweise mit Daten in Bezug auf einen Wartungsvorgang.

12. Verfahren nach Anspruch 1, **dadurch gekennzeichnet, dass** es darin besteht, im Speicher des Messmoduls (110) den Daten aus dem RFID-Chip (200), die im Speicher abgelegt sind, eine Information zuzuordnen, die in Verbindung mit dem gemessenen Druckabfall steht.

13. Verfahren nach Anspruch 1, **dadurch gekennzeichnet, dass** die besagte Zwischeneinheit mit dem besagten Funketikett (200) und dem besagten Messmodul (110) kommuniziert, um die Identifikationsdaten des Reifens mit jenen des Messmoduls (110) zu paaren, und die besagte Paarung zur Empfangseinheit (120, 130) sendet, die dem Chassis zugeordnet ist.

## Claims

1. Method for managing data relating to an assembly forming a wheel (R) of a vehicle (C), said wheel (R) comprising a tire mounted on a rim, said wheel carrying a measuring module (110), said tire carrying an identifier consisting of a radio-frequency tag (200) of the RFID marker type,
said wheel being able to have various states:
- mounted, where said tire is mounted on the rim;
- demounted, where said tire is not mounted on the rim;
where the measuring module (110) detects the variation in pressure in the tire, and
where the storage memory of said measuring module (110) is rewritable,
**characterized in that** it consists, when there is a variation in pressure, of replacing the data stored in the measuring module (110) with new data issuing from another tire.

2. Method according to claim 1, **characterized in that** it consists of defining a low pressure threshold, the passing of which, detected by the measuring module (110), triggers the remplacement and therefore the deletion of the content of the memory of the measuring module (110) containing the data associated with the identifier (200).

3. Method according to claim 1, **characterized in that** it consists of defining a high pressure threshold, the passing of which, detected by the measuring module (110) after passing of the low threshold, triggers the replacement and therefore the deletion of the content of the memory of the measuring module (110) containing the data associated with the identifier (200).

4. Method according to claim 1, **characterized in that** the measuring module (110), activates and/or communicates with the radio-frequency tag (200) by means of a transmission of waves beyond 100 MHz reflected on the metal structure of the tire.

5. Method according to claim 4, wherein the measuring module communicates with a reception unit (120, 130) integrated in the chassis of the vehicle (C), **characterized in that** said radio-frequency tag (200) transmits the data that it contains to the reception unit (120, 130).

6. Method according to claim 4, **characterized in that** it consists of equipping the measuring module (110) with an isotropic antenna.

7. Method according to claim 1, wherein the measuring module (110) communicates with a reception unit (120, 130) integrated in the chassis of the vehicle (C), **characterized in that** it consists of integrating, in the communication frame of said module (110), all or some of the data issuing from the reading of the identifier (200) and stored in the memory.

8. Method according to claim 1, **characterized in that** it consists of measuring the variation in pressure over a given period before effecting the replacement of the identifier associated with the radio-frequency tag (200) in the electronic module.

9. Method according to claim 1, **characterized in that** the data from the radio-frequency tag (200) are transmitted to said measuring module (110) when the wheel is being mounted, that is to say when the wheel assembly is in a state where the tire is not yet fixed to the rim.

10. Method according to claim 1, **characterized in that** the data are transmitted to said measuring module (110) when there are no data relating to the tire entered in the memory of said module (110).

11. Method according to claim 1, **characterized in that** data issuing from the tire are transmitted to said module (110) with supplementary data, such as for example data relating to a maintenance operation.

12. Method according to claim 1, **characterized in that** it consists, in the memory of the measuring module (110), of associating, with the data issuing from the RFID marker (200) stored in the memory, information relating to the pressure drop measured.

13. Method according to claim 1, **characterized by** the fact that said intermediate unit communicates with said radio-frequency tag (200) and said measuring module (110) so as to match the identification data of the tire with those of the measuring module (110) and sends said match to the reception unit (120, 130) associated with the chassis.
